# EUROPEAN PATENT APPLICATION

(11) **EP 3 392 083 A1**
(43) Date of publication of application: **24.10.2018**
(21) Application number: 18158126.5
(22) Date of filing: 22.02.2018
(51) Int. Cl.: B60P 1/26, B62D 33/037

(54) **AN INNOVATIVE, PREFERABLY REAR PILLAR OF DISMOUNTABLE TYPE FOR LORRIES**

(30) Priority: 19.04.2017 IT 202017042892 U
(71) Applicant: Officine Cucini S.r.l., 50052 Certaldo (IT)
(72) Inventor: CUCINI, Fabio, 50052 Certaldo (IT)
(74) Representative: Emmi, Mario

(57) **Abstract**

The present invention concerns a pillar comprising an outer frame for containing the locking/unlocking mechanism, characterized in that one or more parts shaping said outer frame are coupled each other by means of removable connections means, in such a manner that at least a part of the frame is detachable with respect to the remaining part.

## Description

### Technical field

The present invention concerns the technical field of motor vehicles, such as three-wheeled vans, lorries and all the motor vehicles in general, equipped with dump tipping body.

In particular, the invention refers to an innovative pillar, in particular the rear one, for controlling the opening and closing of body boards.

### Prior art

The use of lorries or three-wheeled vans for picking up and carrying waste, wreckage and aggregate materials such as sands and gravels, has been known for a long time.

Such motor vehicles are equipped with a dump tipping body, i.e. able to rotate with respect to fulcrums, in such a manner as to unload the transported material. As the dump body is tilted, the material slides along the dump body itself. Tilting can occur laterally or at the rear by means of an actuator which raises the dump body.

The dump body is equipped with side boards, in particular a tailboard, two side boards and a front board. The side boards and the tailboard are also movable, i.e. they can rotate with respect to fulcrums. In this manner, they delimit the perimeter of the dump body in closing position and they prevent the contained material from leaking accidentally. As it is necessary to unload the material, it is possible to unlock the boards in such a manner that they can rotate to opening position. Therefore, as the dump body is tilted to unload it, the boards are unlocked and can rotate thanks to the force of gravity in opening position, also pushed by material sliding along the dump body.

The device which allows to lock/unlock the boards is known as pillar in technical jargon and it is well-known in the prior art.

The pillar, depending on cases, can have one or more rotatable levers, whose activation moves a simple inner leverage which controls the translation of an opening/closing constraint of a slot in which a fixed pivot is inserted at the end of the board. The opening/closing constraint of the slot can be a simple metallic plate which becomes a sort of sliding rolling gate. This system has been known in the prior art for a long time.

Therefore, each board is blocked above at the right and left ends and there are generally two front pillars, placed behind the cabin, one for each board, which control the opening and closing of the relative side boards on the corresponding end, whereas two rear pillars control at the same time the opening/closing of side boards at the rear ends and the opening/closing of the tailboard.

Generally, the fulcrum of the board is on its superior axis, on which it can tilt.

As described above, in the prior art, the pillar comprises a containment frame in which the components locking/unlocking the board are housed.

In particular, there are levers (one or two) which activate the mechanisms for locking/unlocking the board.

In the prior art, the frame for containing components, i.e. levers and locks activated by levers, is a closed continuous box obtained by welding each other the various plates shaping the box itself by means of continuous perimetral weld.

Therefore, all the inner components are arranged in the box which is finally closed by welding.

Being the obtained solution welded, it does not allow the reopening of the box to access inside it and therefore it is not possible to overhaul possible broken components.

Moreover, seepages of dust, sand and other material can increase a rapid wear of inner component and, being the access not possible, it is not possible either to clean them or carry out an anti-oxidation treatment.

In addition, it is not possible to lubricate them, as the varnishing process requires a stoving at 60°C for liquid varnishes and at 190°C for powdered varnishes. This implies a dissipation of lubricant which would damage the varnish itself. The pillar has to be stoved only when it is assembled and welded, in order to cover welding lines themselves and for this reason this productive system limits the quality of the final product.

### Disclosure of the invention

It is therefore the scope of the present invention to supply an innovative pillar for solving the above-mentioned technical problems.

In particular, the scope of the present invention is to supply a pillar, in particular the rear one, allowing to have all the inner components painted and lubricated one by one before being assembled and allowing an easy disassembly thereof for accessing to the inner components, in order to overhaul them in general.

These and other scopes are obtained through the frame for a pillar, according to claim 1.

Such a frame (10,20) for forming a pillar for dump body of motor vehicle shapes a slot in which at least a part of the operating components of the pillar, for example various leverages, are arranged.

According to the invention, said frame is formed by at least two parts (20, 10) connected each other by means of rapid connection means (50, 51) of removable type or separable between them, in such a manner that a part (20) thereof can be disassembled with respect to the other one (10) to allow the access to the inner slot and then to reassembled again in position.

Therefore, the frame is made by starting from the sheet, worked according to press brake system and shaping at least two parts detachable each other. While assembling it, two components which remain permanently fastened are arranged inside it, while all the components moving inside it for allowing the opening and closing of boards are connected in removable manner, for example by means of movable connection means, such as screw systems, nuts and bolts in general, rivets, pivots with Seeger rings, etc., including the connection between the two parts forming the frame.

In this manner, all the above-mentioned technical inconveniences are easily solved.

In particular the outer frame is now obtained by coupling two or more parts each other by means of such mechanical connection means of movable type and therefore, if necessary, various parts can be detached and then coupled again. This allows to access to the inner components, thus allowing to overhaul them.

The frame can be easily opened and the inner movable mechanisms, leverages for instance, can be removed and replaced by new systems, in case of necessity.

As the production of the frame by welding is not required anymore, it is possible to work, lubricate and varnish separately all the components, among which the frame and inner leverage, to simply assemble them at a later time.

In this manner, working quality, durability and appearance are considerably improved.

Further advantages can be inferred by dependent claims.

### Brief description of drawings

Further features and advantages of the present pillar, according to the invention, will become apparent from the following description of preferred embodiments thereof, given only by way of non-limiting, indicative, example, with reference to the accompanying drawings, wherein:
- Figure 1 depicts a perspective view of a rear pillar, according to the invention;
- Figure 2 outlines an exploded view of the pillar of figure 1;
- Figure 3 depicts only the upper cover 20 of the frame shaping the pillar and depicted according to a production sequence by starting from shaped flat sheet (20-A) which is bent to form the edges (20-B).

### Description of some preferred embodiments

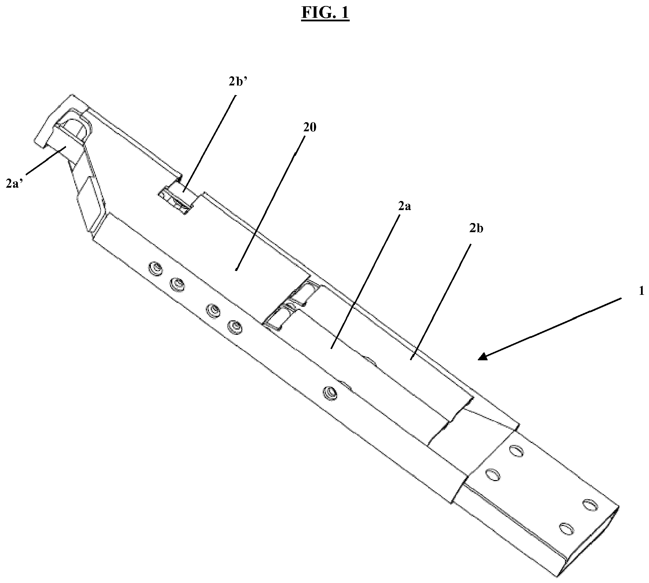

Figure 1 depicts a rear pillar 1, according to the invention.

Therefore, the figure depicts, as per prior art, the two levers 2a and 2b which respectively activate the closing 2a' and 2b'.

In particular, if the lever 2b is raised, the leverage to which it is connected leads to a translation downwards of the plate 2b', thus releasing the access to the slot closed by it, such a seat where the fastened pivot of the board is housed. The same applies to the lever 2a which activates the sliding of the plate 2a' downwards while raising.

The opposite motion of the levers leads them to the closed position of figure 1.

By raising and lowering, the lever activates a well known kinematic motion which moves the plates 2a' and 2b' by translating them.

Obviously, as described, this is not a specific object of the present invention as it is prior art and it will not be described here anymore.

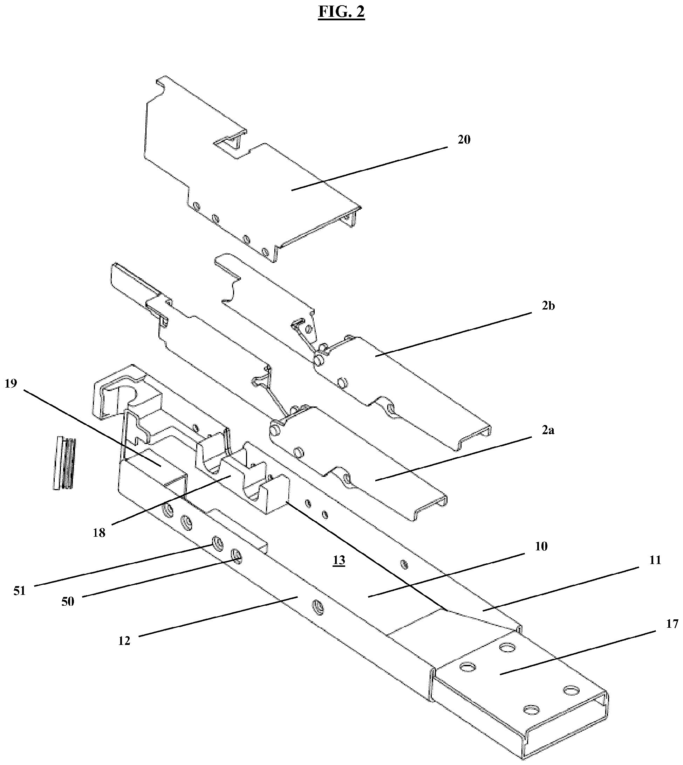

The subsequent figure 2 depicts an exploded view which makes the object of the invention clear.

In particular, the exploded view depicts a frame 10 with box-like shape, with an upper opening and forming a slot for inner components.

Therefore, the shape frame 10 is almost rectangular-shaped.

For instance, such a frame 10 can be obtained by a bent sheet by means of press brake system, in such a manner as to form the two edges 11 and 12 and the base 13.

Therefore, edges rear orthogonally from the base 13 and form two parallel vertical walls, which delimit laterally the inner containment volume of the frame.

Edges 11 and 12 are suitably holed in specific points, in order to allow, according to the invention, the connection to an upper cover 20 which is also in the form of a sheet suitably shaped and bent by means of press brake system.

Some inner components thereof, such as slides 18 and 19 for positioning the leverages or the fastening base 17 are fastened and welded to the box-shaped structure, as per prior art.

On the contrary, the leverages 2a and 2b are prepared and assembled separately to be inserted in the box-shaped frame of figure 2 and then fastened by means of screws, rivets and similar movable systems.

They are varnished, oiled and assembled to be fastened in the box-shaped element.

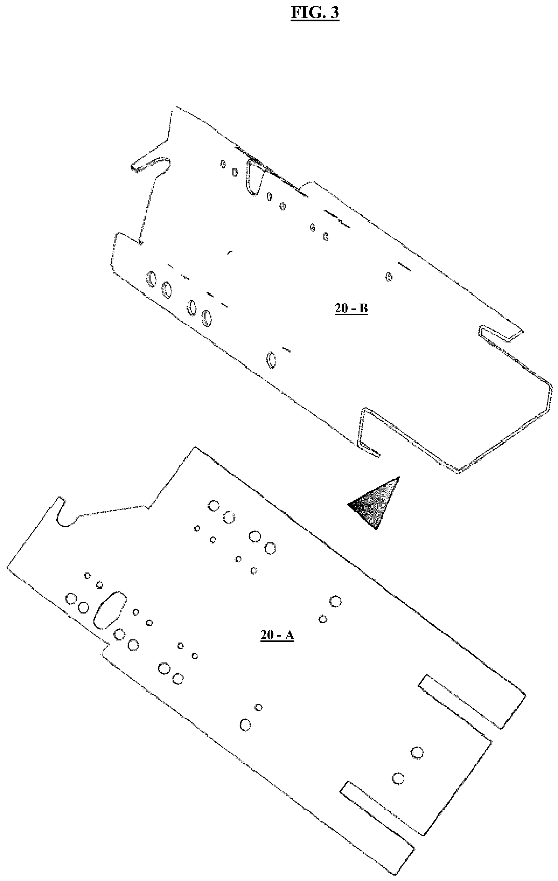

As depicted in the sequence of figure 3, the cover 20 is obtained by a flat sheet (sheet 20-A), suitably shaped and folded (sheet 20-B), which shapes the closing cover, as depicted in the assembly of figure 1.

Side holes depicted in figure 2, for instances holes 50, 51, etc. connect the cover to the rest of the frame by means of movable connection means, such as rivets, screws, etc.

In this manner, all the preset scopes of the present invention are achieved.

In particular, the pillar described in the invention comprises a bearing frame made of sheet bent by means of press brake system for containing the inner components. According to the invention, the permanently fixed components are connected to such a frame, while all the components moving inside it for allowing the opening and closing of boards and the closing cover 20 are connected by means of movable connection means, such as screw systems, nuts and bolts, rivets, pivots with Seeger rings, etc.

In this manner, all the movable components, levers in particular, can be varnished and prepared separately, to be assembled inside the frame at a later time.

The cover 20, as well as the remaining part of the frame, can be varnished and prepared separately and it is possible to connect the cover to the rest of the frame in movable manner. This allows to easily disassemble and access to the whole structure, if it is necessary to overhaul them.

The invention is preferably intended for the rear pillar, which is equipped with two leverages, in such a manner as to control the locking of an end of the side board and the locking of the tailboard.

The invention could also be applied to pillars with a single lever, i.e. front pillars which generally locks an end of the side board.

## Claims

1. A frame (10, 20) for forming the pillar (1) for bodies of motor vehicles, said frame shaping an inner slot in which at least a part of the operating components of the pillar are arranged and **characterized in that** said frame is formed by at least two parts (20, 10) detachable each other and connected by means of rapid connection means (50, 51) in such a manner that a part thereof can be disassembled with respect to the other one (10) by means of the removal or the reciprocal releasement of such rapid connection means to allow the access to the inner slot, in order to re-assemble the part by fastening again a part to the other one by means of the application of said rapid connection means.

2. A frame, according to claim 1, substantially with a box-like shape and comprising at least a lower part (10) which is connected in movable manner to an upper cover (20).

3. A frame, according to claim 2, wherein the upper cover (20) is a sheet suitably shaped and bent according to press brake system.

4. A frame, according to claim 2, wherein the lower part (10) is a sheet a sheet suitably shaped and bent according to press brake system.

5. A frame, according to one or more of the preceding claims, wherein the edges of the lower part (10) and of the upper cover (20) are equipped with holes for applying said rapid connection means which allow to connect the lower part to the cover.

6. A frame, according to one or more of the preceding claims, wherein said rapid connection means are of the removable type, preferably in the form of rivets, screws, bolts and similar ones.

7. A frame, according to one or more of the preceding claims, wherein the frame is painted before the assembly of the inner component, preferably before the bending thereof.

8. A preferably rear pillar (1), comprising a frame (10,20), as per one or more of the preceding claims.

9. A pillar (1), according to claim 8, wherein at least a leverage (2a, 2b) is placed inside it for activating the opening/closing system for locking/unlocking the board, said leverage being equipped with a varnishing and a lubrication made before the assembly on the frame and outside the frame itself.

10. A pillar, according to claim 8 or 9, comprising two separate leverages for locking the tailboard and side board.

11. A pillar, according to one or more of the previous claims, wherein said rapid connection means are of the snap-on type that engaging each other and detachable each other.
